# EUROPÄISCHE PATENTSCHRIFT

(11) **EP 1 581 909 B1**
(45) Veröffentlichungstag und Bekanntmachung des Hinweises auf die Patenterteilung: **13.09.2006**
(21) Anmeldenummer: 03795891.5
(22) Anmeldetag: 12.12.2003
(51) Int. Cl.: G06T 7/00

(54) **VERFAHREN UND ANORDNUNG ZUR AUTOMATISCHEN ERKENNUNG VON OBJEKTEN UND STRUKTUREN IN MATERIALIEN**
METHOD AND ARRANGEMENT FOR THE AUTOMATIC RECOGNITION OF OBJECTS AND STRUCTURES IN MATERIALS
PROCEDE ET DISPOSITIF POUR LA RECONNAISSANCE AUTOMATIQUE D'OBJETS ET DE STRUCTURES DANS DES MATERIAUX

(30) Priorität: 14.12.2002 DE 10258599
(43) Veröffentlichungstag der Anmeldung: 05.10.2005
(73) Patentinhaber: Massen, Robert, 78337 Öhningen-Wangen (DE)
(72) Erfinder: Massen, Robert, 78337 Öhningen-Wangen (DE)
(74) Vertreter: Degwert, Hartmut
(86) Internationale Anmeldenummer: PCT/EP2003/014158
(87) Internationale Veröffentlichungsnummer: WO 2004/055731

(56) Entgegenhaltungen:
- US-A- 5 544 256
- MIETTINEN J ET AL: "Effect of different thresholding methods in RGB imaging" INTELLIGENT ROBOTS AND COMPUTER VISION XX: ALGORITHMS, TECHNIQUES, AND ACTIVE VISION, NEWTON, MA, USA, 29-31 OCT. 2001, Bd. 4572, 2001, Seiten 459-465, XP002290812 PROCEEDINGS OF THE SPIE - THE INTERNATIONAL SOCIETY FOR OPTICAL ENGINEERING, USA ISSN: 0277-786X
- BRADSHAW M: "THE APPLICATION OF MACHINE VISION TO THE AUTOMATED INSPECTION OF KNITTED FABRICS" MECHATRONICS, PERGAMON PRESS, OXFORD, GB, Bd. 5, Nr. 2/3, 1. März 1995 (1995-03-01), Seiten 233-243, XP000510166 ISSN: 0957-4158
- PHAM D T ET ALCOCK R J: "Smart Inspection Sytems - Techniques and Applications of Intelligent Vision" 9. Dezember 2002 (2002-12-09), ACADEMIC PRESS , XP002290814 ISBN: 0-12-554157-0 Abschnitt 4.3
- GUNAWARDENA C A ET AL JOHNSTONE R H ET AL: "COLOUR IDENTIFICATION AND QUALITY INSPECTION SYSTEM FOR AGRICULTURAL PRODUCE" PROCEEDINGS OF THE MIDWEST SYMPOSIUM ON CIRCUITS AND SYSTEMS. CALGARY, AUG. 12 - 15, 1990, NEW YORK, IEEE, US, Bd. VOL. 2 CONF. 33, 12. August 1990 (1990-08-12), Seiten 657-660, XP000295190

## Beschreibung

Die vorliegende Erfindung betrifft ein Verfahren zur automatischen Erkennung von Objekten und Strukturen in Materialien, mit einer 1-Chip Farbbildkamera, die N durch Primärfarbfilter abgedeckte Sensorbildpunkte aufweist, auf die das zu inspizierende Material abgebildet wird. Die vorliegende Erfindung betrifft ferner eine Anordnung zur automatischen Erkennung von Objekten und Strukturen in Materialien, mit einer 1-Chip Farbbildkamera, die N durch Primärfarbfilter abgedeckte Sensorbildpunkte aufweist, auf die das zu inspizierende Material abgebildet werden kann.

Die Erkennung von andersfarbigen Objekten bzw. Strukturen in Materialien, wie beispielsweise in pneumatisch transportierten Baumfasern, bewegten Vliesstoffbahnen oder in im Schüttstrom transportierten körnigen Lebensmitteln, mit Hilfe von Farbkameras und Bildverarbeitungssystemen ist ein seit längerem bekanntes Verfahren, das in der optischen Qualitätskontrolle und optischen Sortierung angewandt wird. Die zu erkennende Objekte bzw. Strukturen können beispielsweise Kontaminationen bzw. Fehlstellen im Material sein.

So werden z.B. in dem von der Fa. Jossi AG (CH-Islikon) produzierten und vertriebenen System mit der Bezeichnung "The Vision Shield" andersfarbige Kontaminationen wie Kunststoffolien, Fadenreste usw. mit Hilfe von schnellen Farbzeilenkameras und einer Echtzeitfarbbildklassifikation im Strom von pneumatisch geförderten Baumwollflocken erkannt und mit Hilfe von von der Bildverarbeitung angesteuerten schnellen pneumatischen Ejektoren gezielt aus dem Flockenstrom ausgeblasen.

Das von der Fa. MASSEN machine vision systems GmbH (D-78467 Konstanz) entwickelte und vermarktete System "The ColourBrain®-NonWovens-Inspector" setzt ebenfalls schnelle Farbzeilenkameras ein, um an schnell bewegten Vliesstoffbahnen andersfarbige Kontaminationen und Fehlstellen im Rahmen der optischen Qualitätskontrolle zu erkennen. Diese Systeme lernen in der Regel in einer Referenzphase die Farbverteilung des GUT Materials, d.h. des kontaminationsfreien bzw. fehlstellenfreien Materials, und speichern diese in Form eines GUT Klassifikators ab. Während der eigentlichen Inspektion im Rahmen der optischen Qualitätskontrolle wird jeder abgetastete Bildpunkt der Materialbahn durch einen Vergleich mit dem während der Referenzphase gewonnen GUT Klassifikator in die Klassen "GUT" und "NICHT-GUT" klassifiziert, und anhand dieses Farbklassenbilds wird die Aussortierung, Markierung oder Protokollierung der Fehlstelle oder der Kontamination ausgelöst (siehe z.B.: Robert Massen, Pia Böttcher: "Form und Farbe: Farbbildverarbeitung für industrielle Überwachung in Echtzeit", S. 121 - 125, Hrsg. Prof. Dr. Hartmut Ernst, in: Maschinelles Sehen, Elektronik Journal Wissenschaft und Praxis, Europa-Fachpresse Verlag München, ISBN 3-87207-004-5, 1990).

US 5,544,256 A offenbart ein System zur automatischen Klassifizierung von Defekten. Dieses vorzugsweise im Bereich der Halbleiterherstellung eingesetzte System verwendet eine automatische Erkennung von Defekten mit Hilfe einer Farbbildkamera. Dabei wird zunächst ein digitales Abbild eines Referenzbildes erstellt. Anschließend wird ein digitales Bild der zur untersuchenden Struktur aufgenommen. Durch einen punktweisen Vergleich der Farbbildpunkte dieser zwei Bilder wird ein binäres Bild erstellt, beispielsweise mit einer "1" für Farbbildpunkte, die sich unterscheiden, und einer "0" für Farbbildpunkte, die identisch sind. Dieses binäre Bild wird unter Anwendung von Fuzzy-Regeln nach verschiedenen Defektklassen ausgewertet.

In dem Buch "Smart Inspection Systems - Techniques and Applications of Intelligent Vision von Pham D T und Alcock R J, Academic Press, 9. Dezember 2002, wird im Abschnitt 4.3 erläutert, in welcher Form aus einem Farbbild Merkmale gewonnen werden können. Dabei wird insbesondere die Zerlegung des Farbbildes in die monochromatischen ROT-, GELB- und BLAU-Bilder angesprochen. Diese monochromatischen Bilder können dann auf verschiedene Weise kombiniert werden.

Bei diesen und ähnlichen Anwendungen ist die Wahl der Farbkameratechnologie eine für die Erkennungsrate und die Systemkosten entscheidende Frage. Im Sinne einer möglichst hohen geometrischen Auflösung müßten eigentlich immer Farbbildkameras mit Farbstrahlteiler und drei getrennten Bildsensoren eingesetzt werden, welche mit Hilfe der Farbstrahlteiler die gleiche Stelle der zu beobachteten Materialbahn auf die drei getrennten Bildsensoren abbilden. Nur auf diese Weise ist die geometrische Auflösung gleich der Anzahl der Sensorbildpunkte. Derartige Farbbildsensoren werden als 3-Chip Farbbildsensoren bezeichnet.

Farbbildkameras mit 3-Chip Farbbildsensoren, die beispielsweise als Farbmatrix- oder Farbzeilenkameras gestaltet sein können, sind aufgrund ihrer aufwendigen optischen Konstruktion sehr teuer, so daß aus wirtschaftlichen Gründen oft die preiswerteren sogenannten 1-Chip Farbbildkameras eingesetzt werden, bei welchen über ein Farbmosaikfilter benachbarte Bildpunkte des Bildsensors mit einem ROT-, GRÜN- oder BLAU-Farbfilter abgedeckt sind. Insbesondere Farbzeilenkameras mit einem Farbstrahlteiler und einer hohen Anzahl von Bildpunkten sind aus technischen Gründen kaum oder nur zu sehr hohen Kosten erhältlich. Die mit diesen Farbzeilenkameras erreichbaren hohen Auflösungen sind aber für die Beobachtung breiter Materialströme oder Materialbahnen sowie die Detektion kleiner, insbesondere fadenförmiger Kontaminationen erforderlich.

Sogenannte tri-lineare Farbzeilenkameras mit drei nebeneinander angeordneten Bildsensorzeilen, welche jeweils mit einem ROT-, GRÜN- und BLAU-Farbfilter abgedeckt sind, stellen eine kostengünstige Lösung für Materialströme dar, deren Geschwindigkeit genau bekannt und konstant ist. Bei "tri-linearen" Farbzeilenkameras erfassen die drei Bildsensorzeilen jeweils drei in Vorschubrichtung unterschiedliche Objektzeilen der Materialbahn. Ein korrektes Farbbild entsteht erst durch die elektronische Verzögerung der beiden in Bewegungsrichtung der beobachteten Materialbahn gesehenen Bildzeilen um eine Zeit, welche proportional dem Quotienten der Bahngeschwindigkeit zum Bildzeilenabstand ist. Bei nicht-konstanten Geschwindigkeiten, wie sie in der industriellen Umgebung oft auftreten und bei Schüttströmen die Regel sind, kann diese Verzögerung nicht mehr durchgeführt werden, so daß diese Kameras dort nicht eingesetzt werden können.

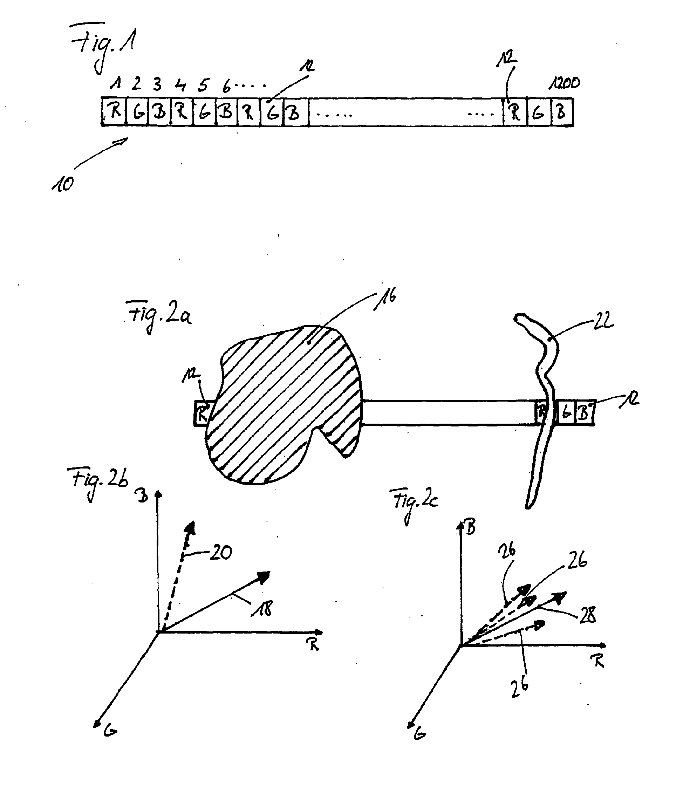

Bei 1-Chip Farbbildkameras mit einem Farbmosaikfilter sind benachbarte Bildpunkte durch jeweils einen andersfarbigen Primärfarbfilter abgedeckt. Fig. 1 zeigt den Fall eines Farbzeilensensors mit 1200 Bildpunkten, bei welchem die einzelnen Bildpunkte mit einem Farbfilter in der Anordnung RGBRGBRGB usw. (R = ROT, G = GRÜN, B = BLAU) abgedeckt sind. Da ein Farbbildpunkt aus jeweils einem Tripel von (RGB)-Bildpunkten besteht, sinkt die geometrische Auflösung dieser Farbzeile auf ca. 1200/3 = 400 Farbbildpunkte. Diese erhebliche Reduktion der geometrischen Auflösung ist unabhängig davon, auf welche Weise benachbarte primärfarbige Bildpunkte zu einem Farbbildpunkt zusammengefaßt werden. Bei einem 1-Chip Farbbildsensor beträgt somit die Anzahl der Farbbildpunkte nur ca. 33% der Anzahl der Sensorbildpunkte. Bei diesen sehr kosten-günstigen Farbbildsensoren ist die geometrische Auflösung für die Farbbildauswertung so klein, daß kleine andersfarbige Objekte bzw. Strukturen nicht mehr aufgelöst erkannt werden können. Diese Einschränkung gilt in gleichem Maß für 1-Chip Farbmatrix- wie 1-Chip Farbzeilensensoren mit Farbmosaikfilter.

Trotz dieser kleinen geometrischen Auflösung kann bei 1-Chip Farbbildsensoren durch verschachtelte Farbfilteranordnungen z.B. in Form eines sog. Bayer-Filters, ein leicht besserer visueller Bildeindruck gewonnen werden; die erhebliche Verringerung der geometrischen Auflösung des 1-Chip Farbbildsensors gegenüber einem 3-Chip Sensor mit Farbstrahlteiler bleibt jedoch bestehen.

Es ist daher von hohem technischem und wirtschaftlichem Interesse, daß die optische Detektion von andersfarbigen Objekten und Strukturen in Materialien, beispielsweise Kontaminationen und Fehlstellen, so durchgeführt werden kann, daß trotz der Verwendung kostengünstiger einfacher 1-Chip Farbbildsensoren die Erkennung von kleinen andersfarbigen Objekten und kleinen Strukturen, die von den Farbbildpunkten des 1-Chip Sensors nicht mehr aufgelöst werden, möglich ist.

Dies wird erfindungsgemäß dadurch erreicht, daß während einer Lernphase ein Referenzmaterial auf die N Sensorbildpunkte der Farbbildkamera abgebildet wird und an jedem Sensorbildpunkt ein Signal erzeugt wird, daß aus den während der Lernphase erzeugten Signalwerten für jeden der N Sensorbildpunkte ein Signalintervall gebildet wird, wobei die Intervallmitte jedes Signalintervalls der Mittelwert der während der Lernphase erzeugten Signalwerte des jeweiligen Sensorbildpunkts und die Intervallbreite proportional zur Varianz der während der Lernphase erzeugten Signalwerte des jeweiligen Sensorbildpunkts ist, daß zur Erkennung von kleinen, unterhalb der Auflösungsgrenze der Farbbildkamera liegenden Objekten und Strukturen das zu inspizierende Material auf die einzelnen Sensorbildpunkte abgebildet wird und jedes der durch die Abbildung an den einzelnen Sensorbildpunkten erzeugten Signale N mit dem Signalintervall des jeweiligen Sensorbildpunktes verglichen wird, und daß ein binäres Klassenbild mit N Bildpunkten erzeugt wird, wobei ein Bildpunkt der ersten Klasse erzeugt wird, wenn der Signalwert des jeweiligen Sensorbildpunktes außerhalb des während der Lernphase erzeugten Signalintervalls liegt und ein Bildpunkt der zweiten Klasse erzeugt wird, wenn der Signalwert des jeweiligen Sensorbildpunktes innerhalb des während der Lernphase erzeugten Signalintervalls liegt. Im Vergleich zu einem Farbklassenbild, welches lediglich eine geometrische Auflösung von N/3 Farbbildpunkte aufweist und damit auch nur ein Klassenbild mit N/3 Bildpunkten erzeugt, erzeugt das erfindungsgemäße Verfahren ein Klassenbild mit der dreifachen geometrischen Auflösung. Damit ist es durch das erfindungsgemäße Verfahren möglich, auch dünne, nur noch ein Sensorbildpunkt breite Objekte bzw. Strukturen zu erkennen, sofern sie sich ausreichend vom Signalwert des objekt- bzw. strukturlosen Materials unterscheiden.

Das Referenzmaterial kann gemäß der vorliegenden Erfindung Material sein, das frei von Objekten und Strukturen ist. Es wird dann ein Bildpunkt der Klasse "Objekt" bzw. "Struktur" erzeugt, wenn der Signalwert des jeweiligen Sensorbildpunktes außerhalb des Signalintervalls liegt.

Alternativ dazu ist vorgesehen, daß das Referenzmaterial repräsentative Stichproben der zu erkennenden Objekte bzw. Strukturen sind. In diesem Fall wird ein Bildpunkt der Klasse "Objekt" bzw. "Struktur" erzeugt, wenn der Signalwert des jeweiligen Sensorbildpunkts innerhalb des Signalintervalls liegt.

Gemäß einer bevorzugten Variante des erfindungsgemäßen Verfahrens wird aus den während der Inspektion des Materials erzeugten Signalen der Sensorbildpunkte jeweils ein neues Signalintervall gebildet, das zu einem definierten Zeitpunkt für den Vergleich mit den während der Inspektion des Materials erzeugten Signalwerten des jeweiligen Sensorbildpunktes übernommen wird. Parallel zur laufenden Inspektion wird demnach ein neues Signalintervall gebildet, um eventuell sich ändernde optische Eigenschaften des Materials zu berücksichtigen. Ab einem definierten Zeitpunkt werden dann die durch die Abbildung des Materials auf die Sensorbildpunkte erzeugten Signale mit dem neuen Signalintervall verglichen und auf der Grundlage dieses Vergleichs ein binäres Klassenbild erzeugt, wobei eventuell sich ändernde optische Eigenschaften des Materials in der Breite und in der Mitte des neuen Signalintervalls berücksichtigt wurden.

Gemäß einer weiteren bevorzugten Variante des erfindungsgemäßen Verfahrens werden durch die elektronische Zusammenfassung von mindestens drei Sensorbildpunkten zu einem Farbbildpunkt K<N Farbbildpunkte gebildet, an denen bei einer Abbildung K<N Farbsignale gebildet werden, während einer Lernphase wird ein Referenzmaterial auf die N Sensorbildpunkte der Farbbildkamera abgebildet und anhand der Farbsignale der K Farbbildpunkte wird ein Klassifikationsschema mit den Klassen "Objekt" bzw. "Struktur" und "Hintergrund" gebildet. Mit Hilfe dieses vorher festgelegten Klassifikationsschemas werden große, oberhalb der Auflösungsgrenze der Farbbildkamera liegende Objekte bzw. Strukturen anhand ihrer Farbeigenschaften erkannt. Dadurch ist es gemäß dieser bevorzugten Variante des erfindungsgemäßen Verfahrens möglich, gleichzeitig sowohl kleine, unterhalb der Auflösungsgrenze liegende Objekte bzw. Strukturen und große, oberhalb der Auflösungsgrenze liegende Objekte bzw. Strukturen mit Hilfe einer einfachen 1-Chip Farbbildkamera zuverlässig zu erkennen.

Zur automatischen Erkennung von Objekten und Strukturen stellt die vorliegende Erfindung ferner eine Anordnung mit einer 1-Chip Farbbildkamera bereit, die N durch Primärfarbfilter abgedeckte Sensorbildpunkte aufweist, auf die das zu inspizierende Material abgebildet werden kann. Die Anordnung umfaßt ferner N Intervallkomparatoren, die jeweils einem der N Sensorbildpunkte zugeordnet sind und in denen jeweils ein dem jeweiligen Sensorbildpunkt zugeordnetes Signalintervall abgelegt werden kann. Jedes Signalintervall ist aus den in einer Lernphase bei der Abbildung eines Referenzmaterials auf den jeweiligen Sensorbildpunkt erzeugten Signalwerten gebildet. Durch einen Vergleich der durch die Abbildung des zu inspizierenden Materials auf die einzelnen Sensorbildpunkte erzeugten Signalwerte mit dem Signalintervall des jeweiligen Sensorbildpunktes liegen an den Ausgängen der Intervallkomparatoren Signale an, die ein binäres Klassenbild mit N Bildpunkten mit den Klassen "Objekt" bzw. "Struktur" und "Hintergrund" bilden. Durch diese Anordnung ist es möglich, auch kleine, unterhalb der Auflösungsgrenze der Farbbildkamera liegende Strukturen zuverlässig zu erkennen.

Weitere Merkmale und vorteilhafte Ausgestaltungen ergeben sich aus den Unteransprüchen.

Das erfindungsgemäße Verfahren wird im folgenden beispielhaft an der optischen Erkennung von andersfarbigen Kontaminationen an einer hellen, bewegten Vliesstoffbahn erläutert, welche durch eine 1-Chip Farbzeilenkamera beobachtet wird. Der Erfindungsgedanke umfaßt jedoch ebenfalls die Anwendung von 1-Chip Farbmatrixkameras zur bildhaften Erfassung von anderen bewegten oder auch statischen Materialbahnen, Schüttströmen oder ähnlichen flächenhaftenden Materialien, bei welchen das Vorhandensein von kleinen Objekten und Strukturen automatisch erkannt werden soll.

Zur Erläuterung werden die folgenden Figuren verwendet. In diesen zeigen:
Fig. 1 den Aufbau eines 1-Chip Farbbildsensors mit ROT-, GRÜN- und BLAU-Farbfiltern, bei welchem die Anzahl K der Farbbildpunkte nur ca. 33% der Anzahl N der Sensorbildpunkte beträgt,
Fig. 2a bis 2c beispielhaft die Erfassung kleiner fadenförmiger Kontaminationen, die unterhalb der Auflösungsgrenze des Farbbildsensors von Figur 1 sind, und die Erfassung großer, mehrere Farbbildpunkte abdeckender Kontaminationen mit Hilfe des in Figur 1 gezeigten 1-Chip Farbbildsensors,
Fig. 3 schematisch eine Anordnung zur Durchführung des erfindungsgemäßen Verfahrens, mit einer 1-Chip Farbbildkamera und einem Intervallkomparator, in dem ein während einer Lernphase gebildetes Signalintervall abgelegt ist.

Zur Erläuterung des Erfindungsgedankens wird eine helle Vliesstoffbahn mit einer 1-Chip Farbbildkamera beobachtet, welche nach Fig. 1 über einen Bildsensor 10 mit insgesamt 1200 Sensorbildpunkten 12 verfügt. Die Sensorbildpunkte 12 sind jeweils mit einem ROT (R)-, GRÜN (G)- oder BLAU (B)-Farbfilter abgedeckt. Die Farbzeile verfügt daher über N = 1200 Sensorbildpunkte 12, aber nur über K =1200/3 = 400 Farbbildpunkte, wobei jeder Farbbildpunkt aus drei benachbarten, mit jeweils einem Primärfarbfilter abgedeckten Sensorbildpunkten gebildet wird. Die geometrische Auflösung dieser 1-Chip Farbbildkamera beträgt daher nur 400 Farbbildpunkte.

Fig. 2a zeigt, wie eine große, flächige, andersfarbige Kontamination 16 auf mehrere Farbbildpunkte abgebildet wird und durch die damit ausreichende geometrische Auflösung sicher über eine Farbbildpunkt-Klassifikation erkannt werden kann. Die Signalwerte dreier benachbarter Sensorbildpunkte bilden jeweils eine Komponente eines Farbvektors im dreidimensionalen R-, G- und B-Raum. Der Farbvektor ist repräsentativ für einen bestimmten Farbwert und anhand der Farbbildpunkt-Klassifikation kann dann zwischen GUT Material, d.h. objekt- bzw. strukturlosem Material, und NICHT-GUT Material, d.h. Material mit einem Objekt bzw. einer Struktur, unterschieden werden. Wie in Figur 2b zu sehen ist, ist bei der Abbildung der großen, andersfarbigen Kontamination 16 der Unterschied zwischen dem Farbvektor 18 des GUT Materials und dem Farbvektor 20 des NICHT-GUT Materials, i.e. der Kontamination, groß und erlaubt damit eine eindeutige Erkennung.

Ein schmaler Faden 22 wird hingegen nur auf einen einzelnen Sensorbildpunkt 12 bzw. 1/3 Farbbildpunkt abgebildet und erzeugt damit keinen eindeutigen, sich von dem GUT Material unterscheidenden Farbwert, welcher sich je nach Lage des Fadens 22 auf dem Sensorbildpunkt 12 und auf den benachbarten Sensorbildpunkten 12 stark verändert. Er kann über eine Farbbildpunkt-Klassifikation nicht zuverlässig erkannt werden, obwohl das skalare Signal des den Faden abbildenden Sensorbildpunktes, i.e. das aus nur einer Komponente bestehende Helligkeitssignal des abbildenden Sensorbildpunktes, sich deutlich von dem skalaren Signalwert unterscheidet, den dieser Sensorbildpunkt erzeugt, wenn er nur GUT Material erfaßt. -

Dieser Sachverhalt ist in Figur 2c veranschaulicht. Die (gestrichelt gezeichneten) Farbvektoren 26, die das Farbsignal dreier benachbarter Sensorbildpunkte 12 mit unterschiedlichen Farbfiltern repräsentieren, wobei auf mindestens einen der Sensorbildpunkte 12 eine fadenförmige Kontamination 22 abgebildet wird, unterscheiden sich kaum von dem Farbvektor 28 der Sensorbildpunkte, auf die nur GUT Material abgebildet wird. Eine zuverlässige Erkennung eines sehr kleinen Objekts bzw. einer Struktur ist mit diesem Verfahren daher nicht möglich.

Der Wert des Helligkeitssignals des den Faden 22 abbildenden Sensorbildpunktes hängt stark davon ab, ob der Faden auf einen ROT-, GRÜN- oder BLAU-Sensorbildpunkt abgebildet wird. Ebenso wird natürlich der Wert des Helligkeitssignals, welches die Abbildung des GUT Materials erzeugt, stark davon abhängen, ob es an einem ROT-, einem GRÜN- oder einem BLAU-Sensorbildpunkt gemessen wird. Um den Faden zuverlässig zu erkennen, wird daher gemäß dem vorliegenden Verfahren der Signalwert jedes Sensorbildpunktes 12 mit einem eigenen Signalintervall verglichen, wobei die Intervallmitte dem Helligkeitsmittelwert an dem entsprechenden R- oder G- oder B-Sensorbildpunkt entspricht, der durch die Abbildung des GUT Materials an diesem Sensorbildpunkt erzeugt wird. Die Intervallbreite wird proportional zur Varianz des Helligkeitssignalwertes erzeugt, welches das GUT Material an dem betreffenden Sensorbildpunkt erzeugt. Die an einem Sensorbildpunkt erzeugten Signalwerte unterliegen einer gewissen Schwankungsbreite, da das GUT Material nie absolut homogen ist. Solange der Signalwert innerhalb des Intervalls liegt, wird GUT Material, d.h. Material ohne andersfarbige Objekte und Strukturen, erfaßt; liegt der Signalwert außerhalb des Intervalls, so ist ein Objekt oder eine Struktur, im hier vorliegenden Fall die fadenförmige Kontamination 22, vorhanden.

In diesem Beispiel wird das struktur- bzw. objektlose Material als Referenzmaterial genommen und in einer Lernphase auf die N Sensorbildpunkte der Farbbildkamera abgebildet. Aus den während dieser Lernphase erzeugten Signalwerten wird für jeden Sensorbildpunkt ein Signalintervall gebildet. Wenn bei der anschließenden automatischen Inspektion des Materials ein Signalwert eines Sensorbildpunktes außerhalb des während der Lernphase erzeugten Signalintervalls liegt, wird ein Bildpunkt der Klasse "Objekt" bzw. "Struktur" erzeugt. Alternativ dazu ist aber auch gemäß der vorliegenden Erfindung vorgesehen, daß das Referenzmaterial repräsentative Stichproben der zu erkennenden Objekte bzw. Strukturen sind. In diesem Fall wird bei der anschließenden automatischen Inspektion ein Bildpunkt der Klasse "Objekt" bzw. "Struktur" erzeugt, wenn der Signalwert des Sensorbildpunktes innerhalb des während der Lernphase erzeugten Signalintervalls liegt.

Gemäß einer bevorzugten Variante des erfindungsgemäßen Verfahrens wird aus den während der Inspektion des Materials erzeugten Signalwerten der Sensorbildpunkte jeweils ein neues Signalintervall gebildet. Die neuen Signalintervalle werden jeweils zu einem definierten Zeitpunkt für den Vergleich mit den an dem jeweiligen Sensorbildpunkt während der Inspektion des Materials erzeugten Signalwerten übernommen. Dadurch kann das als Grundlage für den Vergleich mit den Signalwerten dienende Signalintervall fortlaufend an sich eventuell auftretende optische Eigenschaften des zu inspizierenden Materials angepaßt werden.

Gemäß einer weiteren bevorzugten Variante des erfindungsgemäßen Verfahrens werden parallel zu dem oben beschriebenen Verfahren zur Erkennung kleiner, unterhalb der Auflösungsgrenze liegender Objekte bzw. Strukturen auch große, oberhalb der Auflösungsgrenze liegende Objekte erkannt, indem mindestens drei Sensorbildpunkte zu einem Farbbildpunkt elektronisch zusammengefaßt und so K<N Farbbildpunkte gebildet werden. Während einer Lernphase wird ein Referenzmaterial auf die N Sensorbildpunkte der Farbbildkamera abgebildet und anhand der Farbsignale der K Farbbildpunkte wird ein Klassifikationsschema mit den Klassen "Objekt" bzw. "Struktur" und "Hintergrund" gebildet. Die großen, oberhalb der Auflösungsgrenze der Farbbildkamera liegenden Objekte bzw. Strukturen können dann anhand ihrer Farbeigenschaften mit Hilfe des vorher festgelegten Klassifikationsschema festgelegt werden. Dieses Verfahren entspricht im wesentlichen dem in Verbindung mit den Figuren 2a bis 2c erläuterten Verfahren. Das Verfahren gemäß der vorliegenden Erfindung ermöglicht damit das zuverlässige Erkennen von kleinen und großen andersfarbigen Objekten bzw. Strukturen mit Hilfe einer einfachen, kostengünstigen 1-Chip Farbbildkamera.

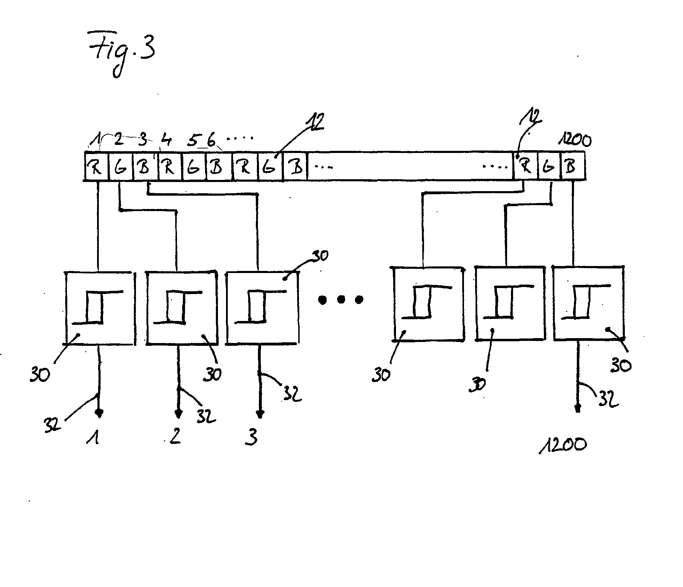

Eine Anordnung zur Durchführung des erfindungsgemäßen Verfahrens ist schematisch in Figur 3 zu sehen. Dort ist jedem der N, in einer Zeile angeordneten Sensorbildpunkte 12 einer Farbzeilenkamera ein eigener Intervallkomparator 30 zugeordnet, in dem das dem jeweiligen Sensorbildpunkt 12 zugeordnete Signalintervall abgespeichert ist. Die an den Ausgängen 32 der N Intervallkomparatoren 30 anliegenden Signale, wobei N im vorliegenden Beispiel 1200 beträgt, bilden die Bildpunkte eines zweiwertigen, zeilenweise aufgebauten Klassenbildes mit den beiden Zuständen "Objekt" bzw. "Struktur" und "Hintergrund".

Zur gleichzeitigen Erfassung von großen, oberhalb der Auflösungsgrenze liegenden Objekten bzw. Strukturen ist eine (hier nicht abgebildete) elektronische Speichereinheit vorgesehen, in dem die Farbsignale, die durch die elektronische Zusammenfassung dreier benachbarter Sensorbildpunkte bei einer Abbildung auf die Sensorbildpunkte erzeugt werden, abgespeichert werden können.

Im Gegensatz zu dem Farbklassenbild, welches lediglich eine geometrische Auflösung von 400 Farbbildpunkten und damit auch nur ein Klassenbild mit 400 Bildpunkten entlang der Sensorzeile erzeugt, erzeugt das erfindungsgemäße Verfahren zur Erkennung kleiner Objekte bzw. Strukturen ein Klassenbild mit der dreifachen geometrischen Auflösung. Damit ist die beschriebene Erfindung in der Lage, auch dünne, nur noch ein Sensorbildpunkt breite Kontaminationen bzw. Strukturen zu erkennen, sofern sie sich ausreichend vom GUT Material im skalaren Signalwert unterscheiden. Dies ist immer dann der Fall, wenn die dünne Kontamination deutlich heller oder dunkler als das objekt- bzw. strukturlose Material ist.

Es ist aber auch dann der Fall, wenn sich die Farbe der Kontamination deutlich von der Primärfarbe des Farbfilters des jeweils abbildenden Sensorbildpunktes und von der Farbe des objekt- bzw. strukturlosen Materials unterscheidet. Ein grüner Faden, welcher von einem ROT-Sensorbildpunkt erfaßt wird, erzeugt dort ein sehr niedriges Signal, da GRÜN und ROT komplementäre Farben sind. Dadurch ist eine gute Detektion möglich.

Da schmale fadenförmige Kontaminationen wegen des bewegten Materials mehrfach auf unterschiedliche Sensorbildpunkte abgebildet werden, ist die Wahrscheinlichkeit sehr hoch, daß zumindest bei einigen Sensorbildpunkten diese Farbdifferenz groß ist und dort zu einer Detektion führt.

Damit erfüllt der erfindungsgemäße Gedanke gleichzeitig zwei Anforderungen: mit Hilfe von preiswerten 1-Chip Farbsensoren können sowohl größere Objekte bzw. Strukturen anhand des Farbunterschieds zum objekt- bzw. strukturlosen Material erkannt werden als auch feine, unter die Auflösungsgrenze der Farbbildpunkte fallende Kontaminationen. Die kleinen, unter die Auflösungsgrenze der Farbbildpunkte fallenden Objekte bzw. Strukturen können sowohl anhand ihres Helligkeitsunterschiedes zum objekt- bzw. strukturlosen Material als auch anhand ihres Farbunterschiedes zu den Primärfarben ROT oder GRÜN oder BLAU des bzw. der jeweils abbildenden Sensorbildpunkte ermittelt werden.

Gemäß einer bevorzugten Variante werden die N unterschiedlichen Intervallmitten und Intervallbreiten in einer Lernphase bestimmt, in der eine repräsentative Bahnlänge von GUT Material, d.h. objekt- bzw. strukturloses Material, von der Farbbildkamera erfaßt wird und für jeden Sensorbildpunkt getrennt der Mittelwert und die Varianz der skalaren Sensorbildpunktsignalwerte bestimmt werden. Eine übliche Festlegung der Intervallbreite ist die sechs- bis achtfache Standardabweichung des GUT Signalrauschens. Durch diese Art des Lernens der N unterschiedlichen Intervallmitten und -breiten wird gleichzeitig auch der Helligkeitsabfall zum Rande des Bildfeldes (der sog. shading Effekt) berücksichtigt, da dieser ebenfalls den Helligkeitswert am Orte jedes Sensorbildpunktes beeinflußt.

Das der Erfindung zugrundeliegende Verfahren ist auch auf 1-Chip-Matrixfarbkameras sowie zur Erkennung von Objekten bzw. Strukturen in bewegten und unbewegten Materialien anwendbar. Es ist besonders vorteilhaft zur Erkennung von fadenförmigen Kontaminationen auf textilen Bahnen, in Schüttströmen von Baumwollflocken und ähnlichen Anwendungen in der automatischen optischen Qualitätskontrolle.

Das erfindungsgemäße Verfahren kann auch dazu verwendet werden, die Position von Kanten eines Objektes in einem mit einer 1-Chip Kamera aufgenommenen Farbbild mit einer um ca. 3-fach höheren Genauigkeit zu erkennen. Hierzu werden die Farbbildpunkte am Rande des Objektes nicht mehr als vektorielle Farbsignale betrachtet, sondern die diese Randzone abbildenden Sensorbildpunkte werden einzeln auf ihre vom Hintergrund abweichende Signalwerte untersucht. Die feinen Strukturen sind in diesem Fall nicht mehr die im oben genannten Beispiel genannten feinen fadenförmigen Kontaminationen, die von den Farbbildpunkten nicht mehr aufgelöst werden können, sondern feine Kanten, die nicht mehr von den Farbbildpunkten aufgelöst werden können und lediglich Farbsäume erzeugen.

## Patentansprüche

1. Verfahren zur automatischen Erkennung von Objekten und Strukturen in Materialien,
mit einer 1-Chip Farbbildkamera, die N durch Primärfarbfilter abgedeckte Sensorbildpunkte aufweist, auf die das zu inspizierende Material abgebildet wird, wobei je 3 benachbarte Sensorbildpunkte einen Farbbildpunkt bilden,
**dadurch gekennzeichnet,**
**daß** während einer Lernphase ein Referenzmaterial auf die N Sensorbildpunkte (12) der Farbbildkamera abgebildet wird und an jedem Sensorbildpunkt (12) ein Signal erzeugt wird,
**daß** aus den während der Lernphase erzeugten Signalwerten für jeden der N Sensorbildpunkte (12) ein Signalintervall gebildet wird, wobei die Intervallmitte jedes Signalintervalls der Mittelwert der während der Lernphase erzeugten Signalwerte des jeweiligen Sensorbildpunkts (12) und die Intervallbreite proportional zur Varianz der während der Lernphase erzeugten Signalwerte des jeweiligen Sensorbildpunkts (12) ist,
**daß** zur Erkennung von kleinen, unterhalb der Auflösungsgrenze der Farbbildkamera liegenden Objekten und Strukturen (22) das zu inspizierende Material auf die N Sensorbildpunkte (12) abgebildet wird und jedes der durch die Abbildung an den einzelnen Sensorbildpunkten (12) erzeugten Signale mit dem Signalintervall des jeweiligen Sensorbildpunktes (12) verglichen wird,
und **daß** ein binäres Klassenbild mit N Bildpunkten erzeugt wird, wobei ein Bildpunkt der ersten Klasse erzeugt wird, wenn der Signalwert des jeweiligen Sensorbildpunkts (12) außerhalb des während der Lernphase erzeugten Signalintervalls liegt und ein Bildpunkt der zweiten Klasse erzeugt wird, wenn der Signalwert des jeweiligen Sensorbildpunkts (12) innerhalb des während der Lernphase erzeugten Signalintervalls liegt.

2. Verfahren nach Anspruch 1, **dadurch gekennzeichnet, daß** das Referenzmaterial Material ist, das frei von Objekten und Strukturen ist, und daß ein Bildpunkt der Klasse "Objekt" bzw. "Struktur" erzeugt wird, wenn der Signalwert des jeweiligen Sensorbildpunkts (12) außerhalb des während der Lernphase erzeugten Signalintervalls liegt.

3. Verfahren nach Anspruch 1, **dadurch gekennzeichnet, daß** das Referenzmaterial repräsentative Stichproben der zu erkennenden Objekte bzw. Strukturen sind und daß ein Bildpunkt der Klasse "Objekt" bzw. "Struktur" erzeugt wird, wenn der Signalwert des jeweiligen Sensorbildpunkts (12) innerhalb des während der Lernphase erzeugten Signalintervalls liegt.

4. Verfahren nach einem der Ansprüche 1 bis 3, **dadurch gekennzeichnet, daß** aus den während der Inspektion des Materials erzeugten Signalwerten der Sensorbildpunkte (12) jeweils ein neues Signalintervall gebildet wird, das zu einem definierten Zeitpunkt für den Vergleich mit den an dem jeweiligen Sensorbildpunkt (12) während der Inspektion des Materials erzeugten Signalwerten übernommen wird.

5. Verfahren nach einem der Ansprüche 1 bis 4, **dadurch gekennzeichnet, daß** durch die elektronische Zusammenfassung von mindestens drei Sensorbildpunkten (12) zu einem Farbbildpunkt K<N Farbbildpunkte gebildet werden, an denen bei einer Abbildung K Farbsignale gebildet werden, daß während einer Lernphase ein Referenzmaterial auf die N Sensorbildpunkte der Farbbildkamera abgebildet und anhand der Farbsignale (12) der K Farbbildpunkte ein Klassifikationsschema mit den Klassen "Objekt" bzw. "Struktur" und "Hintergrund" gebildet wird, und daß große, oberhalb der Auflösungsgrenze der Farbbildkamera liegende Objekte bzw. Strukturen anhand ihrer Farbeigenschaften mit Hilfe des vorher festgelegten Klassifikationsschemas erkannt werden.

6. Verfahren nach einem der vorhergehenden Ansprüche, **dadurch gekennzeichnet, daß** die zu erkennenden Objekte Kontaminationen (16, 22) oder Fehlstellen in oder auf dem Material sind.

7. Verfahren nach einem der vorhergehenden Ansprüche, **dadurch gekennzeichnet, daß** die 1-Chip Kamera eine Farbzeilenkamera ist.

8. Verfahren nach einem der vorhergehenden Ansprüche, **dadurch gekennzeichnet, daß** das Material ein bewegter Materialstrom oder eine bewegte Materialbahn ist.

9. Anordnung zur automatischen Erkennung von Objekten und Strukturen in Materialien, mit einer 1-Chip Farbbildkamera, die N durch Primärfarbfilter abgedeckte Sensorbildpunkte (12) aufweist, auf die das zu inspizierende Material abgebildet werden kann, wobei je 3 benachbarte Sensorbildpunkte einen Farbbildpunkt bilden, **gekennzeichnet durch** N Intervallkomparatoren (30), die jeweils einem der N Sensorbildpunkte (12) zugeordnet sind und in denen jeweils ein dem jeweiligen Sensorbildpunkt (12) zugeordnetes Signalintervall abgelegt werden kann, wobei jedes Signalintervall aus den in einer Lernphase bei der Abbildung eines Referenzmaterials auf den jeweiligen Sensorbildpunkt (12) erzeugten Signalwerten gebildet ist, und wobei **durch** einen Vergleich der **durch** die Abbildung des zu inspizierenden Materials auf die einzelnen Sensorbildpunkte erzeugten Signalwerte mit dem Signalintervall des jeweiligen Sensorbildpunktes (12) an den Ausgängen (32) der Intervallkomparatoren (30) Signale anliegen, die ein binäres Klassenbild mit N Bildpunkten mit den Klassen "Objekt" bzw. "Struktur" und "Hintergrund" bilden.

## Claims

1. A method for the automatic recognition of objects and structures in materials,
comprising a single-chip colour picture camera having N sensor pixels which are covered by primary colour filters and onto which the material to be inspected is imaged, with every 3 adjacent sensor pixels forming a colour pixel,
**characterized in that**
during a learning phase, a reference material is imaged onto the N sensor pixels (12) of the colour picture camera and a signal is generated at each sensor pixel (12),
a signal interval is formed for each of the N sensor pixels (12) from the signal values generated during the learning phase, the centre of the interval of each signal interval being the mean value of the signal values, generated during the learning phase, of the respective sensor pixel (12), and the width of the interval being proportional to the variance of the signal values, generated during the learning phase, of the respective sensor pixel (12),
for the recognition of small objects and structures (22), which are below the resolution limit of the colour picture camera, the material to be inspected is imaged onto the N sensor pixels (12) and each of the signals generated by the imaging at the individual sensor pixels (12) is compared with the signal interval of the respective sensor pixel (12),
and a binary class image including N pixels is produced, a pixel of the first class being produced when the signal value of the respective sensor pixel (12) is outside of the signal interval generated during the learning phase, and a pixel of the second class being produced when the signal value of the respective sensor pixel (12) is within the signal interval generated during the learning phase.

2. The method according to claim 1, **characterized in that** the reference material is a material that is free of objects and structures, and that a pixel of the "object" or "structure" class is produced when the signal value of the respective sensor pixel (12) is outside of the signal interval generated during the learning phase.

3. The method according to claim 1, **characterized in that** the reference material is representative random samples of the objects or structures to be recognized, and that a pixel of the "object" or "structure" class is produced when the signal value of the respective sensor pixel (12) is within the signal interval generated during the learning phase.

4. The method according to any of claims 1 to 3, **characterized in that** a new signal interval is formed from each of the signal values, generated during the inspection of the material, of the sensor pixels (12), the new signal interval being adopted at a defined moment for the comparison with the signal values generated at the respective sensor pixel (12) during the inspection of the material.

5. The method according to any of claims 1 to 4, **characterized in that** by the electronic combination of at least three sensor pixels (12) into a colour pixel, K<N colour pixels are formed at which K colour signals are formed in an imaging, that during a learning phase a reference material is imaged onto the N sensor pixels of the colour picture camera and a classification scheme having the classes "object" or "structure" and "background" is formed on the basis of the colour signals (12) of the K colour pixels, and that large objects or structures that are above the resolution limit of the colour picture camera are recognized on the basis of their colour attributes with the aid of the previously defined classification scheme.

6. The method according to any of the preceding claims, **characterized in that** the objects to be recognized are contaminations (16, 22) or defects in or on the material.

7. The method according to any of the preceding claims, **characterized in that** the single-chip camera is a colour line camera.

8. The method according to any of the preceding claims, **characterized in that** the material is a moving stream of material or a moving web of material.

9. An arrangement for the automatic recognition of objects and structures in materials, comprising a single-chip colour picture camera having N sensor pixels (12) which are covered by primary colour filters and onto which the material to be inspected can be imaged, with every 3 adjacent sensor pixels forming a colour pixel, **characterized by** N interval comparators (30) which are each associated with one of the N sensor pixels (12) and in each of which one signal interval associated with the respective sensor pixel (12) can be stored, each signal interval being formed from the signal values generated in a learning phase in the imaging of a reference material onto the respective sensor pixel (12), and signals being supplied at the outputs (32) of the interval comparators (30) by a comparison of the signal values generated by the imaging of the material to be inspected onto the individual sensor pixels with the signal interval of the respective sensor pixel (12), the signals forming a binary class image including N pixels having the classes "object" or "structure" and "background".

## Revendications

1. Procédé de reconnaissance automatique d'objets et de structures dans des matériaux,
comportant un appareil photo couleur monopuce, qui présente N pixels capteurs couverts par des filtres couleurs primaires, sur lesquels est reproduit le matériau à inspecter, 3 pixels capteurs voisins formant un pixel couleur,
**caractérisé en ce que**
pendant une phase d'apprentissage, un matériau de référence est reproduit sur les N pixels capteurs (12) de l'appareil photo couleur et un signal est engendré au niveau de chaque pixel capteur (12),
**en ce qu'**un intervalle de signal est formé pour chacun des N pixels capteurs (12) à partir des valeurs de signal engendrées pendant la phase d'apprentissage, le milieu d'intervalle de chaque intervalle de signal étant la valeur moyenne des valeurs de signal engendrées pendant la phase d'apprentissage du pixel capteur (12) respectif et la largeur d'intervalle est proportionnelle à la variance des valeurs de signal engendrées du pixel capteur (12) respectif pendant la phase d'apprentissage,
**en ce que** pour reconnaître des objets et structures (22) de petite taille se trouvant en dessous de la limite de résolution de l'appareil photo couleurs, le matériau à inspecter est reproduit sur N pixels capteurs (12) et chacun des signaux engendrés par la reproduction au niveau des pixels capteurs (12) individuels est comparé à l'intervalle de signal du pixel capteur (12) respectif,
et **en ce qu'**une classe image binaire est engendrée avec N pixels, un pixel de la première classe étant engendré lorsque la valeur de signal du pixel capteur (12) respectif se trouve en dehors de l'intervalle de signal engendré pendant la phase d'apprentissage et un pixel de la deuxième classe étant engendré lorsque la valeur de signal du pixel capteur (12) respectif se trouve à l'intérieur de l'intervalle de signal engendré pendant la deuxième phase d'apprentissage.

2. Procédé selon la revendication 1, **caractérisé en ce que** le matériau de référence est un matériau qui est exempt d'objets et de structures, et **en ce qu'**un pixel de la classe "objet" ou "structure" est respectivement engendré lorsque la valeur de signal du pixel capteur (12) respectif se trouve en dehors de l'intervalle de signal engendré pendant la phase d'apprentissage.

3. Procédé selon l'une des revendications 1, **caractérisé en ce que** le matériau de référence constitue des échantillons pris au hasard, représentatifs des objets ou structures à reconnaître, et **en ce qu'**un pixel de la classe objet" ou "structure" est respectivement engendré lorsque la valeur de signal du pixel capteur (12) respectif se trouve dans l'intervalle de signal engendré pendant la phase d'apprentissage.

4. Procédé selon l'une des revendications 1 à 3, **caractérisé en ce qu'**à partir des valeurs de signal engendrées pendant l'inspection du matériau, des pixels capteurs (12), est formé un nouvel intervalle de signal respectif qui est adopté à un instant défini pour la comparaison avec les valeurs de signal engendrées sur le pixel capteur (12) respectif pendant l'inspection du matériau.

5. Procédé selon l'une des revendications 1 à 4, **caractérisé en ce que** par le groupement électronique d'au moins trois pixels capteurs (12) en un pixel couleur sont formés K<N pixels couleurs sur lesquels K signaux couleurs sont formés dans une image, **en ce que** pendant une phase d'apprentissage, un matériau de référence est reproduit sur M pixels capteurs de l'appareil photo couleur et, à l'aide des signaux couleurs (12) des K pixels couleurs est formé un schéma de classification avec les classes "objet" ou "structure" et "arrière-plan", et **en ce que** des objets ou structures de grande taille situés au-dessus de la limite de résolution de l'appareil photo couleur sont reconnus sur la base de leurs propriétés de couleurs à l'aide du schéma de classification auparavant défini.

6. Procédé selon l'une des revendications précédentes, **caractérisé en ce que** les objets à reconnaître sont des contaminations (16, 22) ou des défauts dans ou sur le matériau.

7. Procédé selon l'une des revendications précédentes, **caractérisé en ce que** l'appareil photo monopuce est un appareil photo linéaire couleur.

8. Procédé selon l'une des revendications précédentes, **caractérisé en ce que** le matériau est un flux de matériau en mouvement ou une bande de matériau en mouvement.

9. Agencement pour la reconnaissance automatique d'objets et de structures dans des matériaux, comportant un appareil photo couleur monopuce, qui présente N pixels capteurs couverts par des filtres couleurs primaires, sur lesquels est reproduit le matériau à inspecter, 3 pixels capteurs voisins formant un pixel couleur, **caractérisé par** N comparateurs à intervalles (30), qui sont chacun associés à un des N pixels capteurs (12) et dans lesquels un intervalle de signal respectivement associé au pixel capteur (12) respectif peut être stocké, chaque intervalle de signal étant formé à partir des valeurs de signal engendrées dans une phase d'apprentissage lors de la reproduction d'un matériau de référence sur le pixel capteur (12) respectif, et par une comparaison des valeurs de signal engendrées par la reproduction du matériau à inspecter sur les pixels capteurs individuels avec l'intervalle de signal du pixel capteur (12) respectif, des signaux étant appliqués aux sorties (32) des comparateurs d'intervalles (30), lesquels signaux forment une classe image binaire avec N pixels ayant les classes "objet" ou "structure" et arrière-plan.
